# EUROPÄISCHE PATENTSCHRIFT

(11) **EP 0 530 919 B1**
(45) Veröffentlichungstag und Bekanntmachung des Hinweises auf die Patenterteilung: **06.12.1995**
(21) Anmeldenummer: 92202650.5
(22) Anmeldetag: 02.09.1992
(51) Int. Cl.: B29D 31/02, B29C 45/14, B29C 67/00, F16C 33/20

(54) **Verfahren zum Herstellen eines Gleitlagers für ein bewegliches Funktionsteil, Vorrichtung zur Durchführung dieses Verfahrens und Lagerungsteil des Gleitlagers**
Process for the production of a sliding bearing for a movable piece, device for execution of this process and bearing element for the sliding bearing
Procédé pour la production d'un palier lisse pour une pièce mobile, dispositif pour l'exécution de ce procédé et coussinet de ce palier lisse

(30) Priorität: 05.09.1991 DE 4129468
(43) Veröffentlichungstag der Anmeldung: 10.03.1993
(73) Patentinhaber: Philips Patentverwaltung GmbH, 22335 Hamburg (DE); Philips Electronics N.V., 5621 BA Eindhoven (NL)
(72) Erfinder: Weber, Georg, c/o Philips Patentverwaltung GmbH, W-2000 Hamburg 1 (DE); Kunze, Norbert, c/o Philips Patentverwaltung GmbH, W-2000 Hamburg 1 (DE); Fallenbeck, Wolfgang, c/o Philips Patentverwaltung, W-2000 Hamburg 1 (DE); Kämmler, Georg, c/o Philips Patentverwaltung GmbH, W-2000 Hamburg 1 (DE); Käufer, Helmut, Prof. Dr., W-4020 Mettmann 2 (DE)
(74) Vertreter: von Laue, Hanns-Ulrich, Dipl.-Ing.

(56) Entgegenhaltungen:
- EP-A- 0 392 600
- DE-A- 2 841 937
- DE-B- 1 055 892
- GB-A- 1 515 869
- US-A- 3 214 504

## Beschreibung

Die Erfindung betrifft ein Verfahren zum Herstellen eines Gleitlagers für ein bewegliches Funktionsteil gemäß Oberbegriff des Anspruchs 1, eine Vorrichtung zur Durchführung dieses Verfahrens gemäß Oberbegriff des Anspruchs 10 und ein Lagerungsteil eines Gleitlagers gemäß Oberbegriff des Anspruchs 24.

Die Erfindung bezieht sich auf ein Verfahren zum Herstellen eines Gleitlagers für ein bewegliches Funktionsteil, zu dessen Herstellung von einem Lagerungsteil ausgegangen wird, das einstückig in Kunststoffspritz- oder Gießtechnik an eine metallische Lagerplatte angeformt ist und aus einem Lagersteg, der ein Loch der metallischen Lagerplatte durchgreift, und Haltestücken, die sich an beiden Plattenoberflächen seitlich des Loches abstützen, besteht. Das Gleitlager ist insbesondere vorgesehen zur Ausbildung von in Gleitlagerqualität dreh- bzw. schiebbaren Teilen an Metallplatten in Laufwerken von Bandspielgeräten, wobei die Teile in Outsert-Moulding-Technik an die Metallplatten angespritzt sind.

Ein derartiges Verfahren zum Herstellen eines Lagers eines beweglichen Funktionsteiles ist aus EP 392 600 A2 bekannt. Die Lagerplatte ist dabei eine Grundplatte, die mit einer Vielzahl von Halte-, Stütz- und Funktionsteilen versehen wird, wobei die angespritzten oder angegossenen Teile sich stets mit Hilfe eines durch ein Plattenloch erstreckenden Steges und beiderseits der Plattenoberfläche vorgesehenen Haltestücken an der Platte festhält. Derartige Teile sind entweder ortsfest oder auch bedingt drehbar; sie weisen keine Lagereigenschaften aus.

In der EP 392 600 A2 ist beschrieben, daß man das bewegliche Lagerungsteil, bestehend aus dem Steg und den beiderseits der Plattenoberfläche vorgesehenen Haltestücken, durch einen nachträglichen Deformationsvorgang so verändern kann, daß die Lagerung zu einem Gleitlager wird. Auf diese Art und Weise lassen sich unmittelbar an der metallischen Platte beispielsweise Schieber, Radlager für Schieber und Zahnräder bilden.

In diesem Zusammenhang ist auf die US-PS 32 14 504 zu verweisen, aus der es zum Herstellen eines Drehzapfens für eine Angelrute bekannt ist, bei in Kunststoff eingespritzten Wellenenden diese durch einen Walkvorgang drehbeweglich zu machen.

Aus der DE-AS 14 72 403 ist ein Verfahren zum Herstellen eines Kegelradgetriebes aus Kunststoffrädern bekannt, bei dem die Kegelradlagerungen dadurch gebildet werden, daß die Radwellen durch ein Loch in einer Halteplatte hindurch gespritzt werden und auf der Kegelradseite eine breite Überlappung des durchspritzten Achsloches erfolgt, während die Überlappung auf der anderen Halteplattenseite nur gering ist. Durch ein Umfalzen der Halteplatte werden die Kegelräder miteinander in Eingriff gebracht. Durch das Umfalzen erfolgt gleichzeitig eine Sicherung der Kegelräder gegen ein Herausfallen. Es ist nicht beschrieben, auf welche Weise die Einspritzungen Lagereigenschaften erhalten.

Es ist Aufgabe der Erfindung, den Deformationsvorgang so gezielt ablaufen zu lassen, daß im Rahmen eines Umformvorganges der Kunststoff in seiner Struktur keine Beeinträchtigung erfährt und die äußere Geometrie oberhalb und unterhalb der Lagerplatte nicht verändert wird.

Die gestellte Aufgabe ist erfindungsgemäß dadurch gelöst, daß das Lagerungsteil durch einen auf den Spritz- oder Gießvorgang folgenden Verformungsvorgang verändert wird mittels einer Kraft, die in den inneren, mittleren Bereich des Lagersteges eingebracht wird und von dort aus derart verformend auf das Lagerungsteil wirkt, daß der Lagersteg durch Streckung gelängt wird.

Dieser Vorgang ist ein Umformvorgang mit einer Änderung innerhalb der molekularen Struktur in Form von Orientierungsvorgängen mit einer molekularen Ausrichtung. Es entstehen dabei bevorzugt an den beanspruchten und gleitenden Stellen Molekularorientierungen, die eine bessere Gleitung und höhere Lagerfähigkeit bewirken. Die Orientierung ist belastungsgerecht.

Bei Ausnutzung der Parameter des Kunststoffes, bei denen er besonders fließwillig ist, wird das gezielte Fließen gefördert, und die Struktur des Kunststoffes wird trotz einer örtlich begrenzten Formveränderung beibehalten. Außerdem kann bei der Ausnutzung der Fließwilligkeit des Kunststoffes eine Rückbildung in die Ursprungsform vermieden werden.

Nach einer Ausgestaltung der Erfindung ist vorgesehen, daß die aus dem Inneren des Lagersteges heraus wirkende Kraft radial auf das Stegmaterial in Richtung auf die Lochwandung in der metallischen Lagerplatte wirkt und dabei das Stegmaterial zu den Lochwänden wegdrückt. Ferner ist nach einer weiteren Ausgestaltung der Erfindung vorgesehen, daß die aus dem Inneren des Lagersteges heraus wirkende Kraft axial auf das Stegmaterial wirkt und dabei den Lagersteg längs der Lochwandung in der metallischen Lagerplatte durch eine Streckung verformt. In beiden Fällen heben sich die Haltestücke von den Plattenoberflächen ab.

Nach einer weiteren Ausgestaltung der Erfindung ist vorgesehen, daß der Kunststoff aus dem Inneren des Lagersteges heraus mittels Dornen, die von einer oder beiden Lagerplattenoberflächen her in Durchbrüche oder Einbuchtungen des Lagersteges geführt werden, verdrängt wird. Die Aufweitdorne drücken dabei also den Kunststoff in einem Verdrängungsvorgang in Richtung auf die Lochwände weg. Dabei ist in weiterer Ausgestaltung der Erfindung vorgesehen, daß der Kunststoff beim radialen Verdrängen zunächst zu den Lochwänden und dort teilweise abgelenkt zu den Plattenoberflächen fließt.

Um eine ausreichende Fließfähigkeit des Kunststoffes zu gewährleisten, ist es wichtig, daß der Verdrängungsvorgang nicht zu schnell abläuft, um dem Kunststoffmaterial Zeit zum Fließen zu geben. Nach einer weiteren Ausgestaltung der Erfindung ist dazu vorgesehen, daß die Verdrängungsgeschwindigkeit unterhalb von 0,1 m/sec liegt. Bei der Verwendung von PP (Polypropylen) und HDPE (Polyäthylen) sind auch höhere Geschwindigkeiten möglich.

Die Fließwilligkeit des Kunststoffes und seine Fließgeschwindigkeit hängen auch unmittelbar mit der Temperatur des Kunststoff beim Verdrängungsvorgang oberhalb der Gebrauchstemperatur und unterhalb des Schmelzbereiches bzw. des Erweichungsbereiches eingestellt ist.

Nach einer weiteren Ausgestaltung der Erfindung ist vorgesehen, daß die bei der Behandlung entstandene Molekularorientierung durch ein Fixieren, nämlich ein Abkühlen bei aufrechterhaltenem Umformdruck, und ein Tempern, nämlich einer Temperaturlagerung ohne Belastung stabilisiert wird. Diese Stabilisierung bleibt auch bei nachträglichen erneuten Erwärmungen bestehen. Schon mit einem Thermofixieren für die Dauer von 10 min ist das notwendige Fließen des Kunststoffes zu erreichen.

Der Zeitpunkt der Verformung kann den Gegebenheiten entsprechend ausgewählt werden, und zwar noch im Spritzwerkzeug, sofort nach dem Entformen, nach erneutem Erwärmen oder nach dem Entformen bei bereits abgekühltem Werkstück.

Nach einer weiteren Ausgestaltung der Erfindung ist vorgesehen, daß die Umformung des Kunststoffes mittels eines im inneren, mittleren Bereich des Lagersteges drehenden und/oder vibrierenden Dornes durchgeführt wird, wobei der Verformungsvorgang unterstützt wird durch eine Lufttemperierung während der Dreh- oder Vibrationsbewegung des Dornes.

Für die Durchführung des Verfahrens nach der Erfindung eignen sich Vorrichtungen, welche dadurch gekennzeichnet sind, daß wenigstens ein Dorn vorgesehen ist, mittels dessen die in den inneren, mittleren Bereich des Lagersteges einzubringende Kraft eingebracht wird.

Eine erste vorteilhafte Ausgestaltung der Vorrichtung ist gekennzeichnet durch einen leicht konischen Dorn, der durch einen Durchbruch im inneren, mittleren Bereich des Lagersteges hindurchfahrbar ist zum teilweisen Verdrängen des zwischen dem Dorn und den Lochwänden befindlichen Kunststoffmaterials. Ein derartiger, leicht konischer Dorn, dessen Konizität nach einer weiteren Ausgestaltung der Erfindung 3° bis 7° gegenüber der Dornmittellinie beträgt, verdrängt das Kunststoffmaterial zwischen sich und den Lochwänden und weiter zu den Plattenoberflächen unter partieller Ausrichtung der molekularen Struktur.

Eine zweite vorteilhafte Ausführungsform der Vorrichtung zur Durchführung des Verfahrens ist gekennzeichnet durch von beiden Plattenoberflächen her gegen jeweils eine Einbuchtung im mittleren Stegbereich fahrbare Dorne zum Verdrängen des zwischen den Dornen und den Lochwänden befindlichen Kunststoffmaterials. Durch eine derartige doppelseitige Dornführung wird der geradlinige Verdrängungseffekt vom Dorn bzw. von den Dornen zu den Lochwänden verbessert.

Beim Einsatz von Dornen, die in Durchbrüche des Steges eingefahren werden, läßt sich eine weitere Vergleichmäßigung der auf die Lochwände gerichteten Verdrängung erzielen bei einer dritten Ausführungsform der Vorrichtung mit einer geschlitzten Hülse, die bei einem runden Durchbruch während des Aufweit- und Verdrängungsvorganges zwischen Durchbruchswand und Dornen vorgesehen ist, wobei die Dorne mit konischen Dornspitzen aufweitend und damit den Lagersteg längend gegen die Hülse drücken. Nach einer weiteren Ausgestaltung dieser Ausführungsform ist vorgesehen, daß die Wand des Durchbruchs zur Mitte hin bauchig ausgebildet ist mit einem geringeren Durchgangsquerschnitt. Die Hülse weitet sich bei einer radialen Lagergestaltung radial aus und optimiert den radialen Verdrängungseffekt in Richtung auf die Lochwände und die Längung des Lagersteges.

Eine vierte Ausführungsform der Erfindung zur Durchführung des Verfahrens nach der Erfindung ist dadurch gekennzeichnet, daß der Durchbruch im Lagersteg mittels wenigstens eines exzentrisch zu der Mittelachse des Durchbruchs angeordneten Dornes durch einen exzentrischen Bewegungsvorgang des Dornes aufweitbar ist zum teilweisen Verdrängen des zwischen dem Dorn und den Lochwänden befindlichen Kunststoffmaterials. Der sich exzentrisch um die mittlere Durchbruchachse bewegende Dorn weitet den Durchbruch in einer Art Walkbewegung auf.

Eine fünfte Ausführungsform der Vorrichtung zur Durchführung des Verfahrens nach der Erfindung ist dadurch gekennzeichnet, daß der Durchbruch im Lagaersteg senkrecht zu seiner Längsachse ein elliptisches Profil aufweist, daß der oder die Dorne ein entsprechend geformtes elliptisches Profil aufweisen und daß das Material des Lagersteges durch eine umlaufende oder hin und her schwingende Bewegung des Dornes oder der Dorne zwischen Dorn und Lochwänden durch teilweises Verdrängen des Kunststoffmaterials längbar ist. Bei dem elliptischen Durchbruchsprofil und dem im Querschnitt elliptischen Dorn ergibt sich ein ähnlicher Aufweitungseffekt wie bei der vierten Ausführungsform, der auch wieder einem Walkprozeß nahekommt, der das Kunststoffmaterial zwischen Durchbruch und Lochwänden abwechselnd belastet und entlastet.

Nach einer vorteilhaften Ausgestaltung der vierten und fünften Ausführungsform ist vorgesehen, daß der Dorn eine Ausbauchung aufweist, deren größter Durchmesser sich etwa in der Mitte des Lagersteges bzw. im Bereich der Lagerplattenmitte befindet. Der Längungseffekt des Lagersteges wird dadurch verbessert.

Eine sechste Ausführungsform der Vorrichtung zur Durchführung des Verfahrens nach der Erfindung ist dadurch gekennzeichnet, daß bereits bei der Herstellung des Lagerungsteiles in der Kunststoffspritz- oder Gießtechnik in den mittleren Bereich des Lagersteges ein Einlegedorn eingefügt ist, der wenigstens im Lochbereich eine Einschnürung aufweist, und daß der Lagersteg durch ein Herausziehen des Einlegedornes aufgeweitet wird, wodurch der zunächst vom Einlegedorn ausgefüllte Durchbruch durch teilweises Verdrängen des Kunststoffmaterials aufgeweitet wird. Die nachträgliche Zuführung eines Dornes ist in diesem Fall überflüssig, weil der Dorn, der die Ausweitung durchführt, gleich beim Spritzvorgang in den Steg mit umgespritzt wird und beim Herausziehen die Aufweitung des Durchbruches herbeiführt. Vorrichtungsmäßig stellt dies eine wesentliche Vereinfachung dar.

Nach einer siebenten Ausführungsform der Erfindung ist vorgesehen, daß von einer der Plattenoberflächen eine Einbuchtung in den Lagersteg hineinreicht, daß im Bereich der anderen Plattenoberfläche eine den vollen Querschnitt des Lagersteges umgrenzende Stützscheibe vorhanden ist und daß in die Einbuchtung des Lagersteges ein Dorn einführbar ist, mit dem der Lagersteg in Längsrichtung reckbar ist. In diesem Fall wird das Lösen der Haltestücke allein durch das Längen des Steges herbeigeführt. Weiterhin ist bei diesem Längen ein größeres Spiel zwischen den Lochwänden und dem Lagersteg einstellbar.

Besonders günstig ist es, wenn bei dieser siebenten Ausführungsform der Boden der Einbuchtung etwa in der Höhe der beim Einfahren des Dornes erreichten zweiten Plattenoberfläche vorgesehen ist. Der Lagersteg wird damit über seine ganze Länge gereckt.

Nach einer achten Ausführungsform der Erfindung ist vorgesehen, daß gegen den Durchbruch im Lagerungsteil ein Dorn fahrbar ist, der in Richtung auf sein freies Ende von einem Teil größeren Durchmessers als der Durchbruch über eine Einschnürung in einen Teil kleineren Durchmessers übergeht, und daß der Teil kleineren Durchmessers in eine Ausnehmung eines Niederhalters einfahrbar ist, mit dem das Lagerungsteil entgegen der Zustellrichtung des Dornes abstützbr ist zum Verdrängen des Kunststoffmaterials in Richtung auf die Lochwände. Der Dorn kann dadurch nicht seitlich weglaufen und führt eine sehr gleichmäßige Verdrängung in Richtung auf die Lochwände durch.

In weiterer Ausgestaltung der achten Ausführungsform der Erfindung ist dabei vorgesehen, daß der Innendurchmesser des Niederhalters und der Außendurchmesser des Dornteiles mit kleinerem Durchmesser so aufeinander abgestimmt sind, daß der Dornteil in dem Niederhalter beim Verformungsvorgang geführt ist.

Die Gestaltung der Durchbrüche in den Lagerstegen ist gleichfalls von wesentlicher Bedeutung für den Verdrängungs-, Reck- und Aufweitungseffekt sowie für den Orientierungs- bzw. Eigenverstärkungseffekt.

Nach einer weiteren Ausgestaltung der Erfindung ist ein mit einem der obigen Verfahren oder mit einer der obigen Vorrichtungen hergestelltes Lagerungsteil eines Gleitlagers für ein bewegliches Funktionsteil aus Kunststoff vorgesehen, welches dadurch gekennzeichnet ist, daß der Lagersteg in seinem inneren, mittleren Bereich einen Durchbruch oder mindestens eine Einbuchtung aufweist.

Eine erste Ausführungsform dieses Lagerungsteils ist dadurch gekennnzeichnet, daß der Lagersteg in seinem inneren, mittleren Bereich und in Durchgangsrichtung den Durchbruch mit der Durchbruchswand aufweist und daß der Durchbruch vor dem Einfahren der Dorne eine zur Durchbruchsmitte zulaufende Wandausbildung mit geringeren Durchmessern hat. Diese zur Durchbruchsmitte zulaufende Wandausbildung kann verschieden gestaltet sein. Eine bevorzugte Gestaltungsvariante dieser ersten Ausführungsform ist dabei dadurch gekennzeichnet, daß die bauchige Wandausbildung ihren geringsten Durchbruchsdurchmesser etwa auf halber Durchbruchslänge aufweist. Eine andere bevorzugte Gestaltungsvariaante ist dabei dadurch gekennzeichnet, daß die zur Durchbruchsmitte zulaufende Wandausbildung durch das Einformen von Sattelflächen erreicht ist. Mit der entsprechenden Dorngestaltung ergeben sich damit günstige Bedingungen für die axiale Aufweitung, bei der das Kunststoffmaterial von der Durchbruchsmitte zum Lochrand fließt.

Eine andere Ausführungsform des Lagerungsteiles des Gleitlagers ist dadurch gekennzeichnet, daß der Lagersteg in seinem mittleren Bereich und in Durchgangsrichtung den Durchbruch mit der Durchbruchswand aufweist und daß der Durchbruch vor dem Einfahren der Dorne eine zu den Lochwänden parallele Wandausbildung hat. Dieser Durchbruch ist beispielsweise mittels des exzentrischen Dornes aufweitbar oder in weiterer Ausgestaltung der Erfindung dadurch gekennzeichnet, daß in den Durchbruch eine quer zur Lagerplatte geschlitzte Hülse eingespritzt ist, die sich nach dem Aufweiten der Hülse von den Lochwänden trennt. Nach dem Aufweitvorgang fällt die Hülse aus dem Durchbruch.

Bei einer anderen Ausführungsform des Lagerungsteiles des Gleitlagers ist vorgesehen, daß von einer der Plattenoberflächen eine Einbuchtung in den Lagersteg hineinreicht und daß im Bereich der anderen Plattenoberfläche eine den vollen Querschnitt des Lagersteges umgrenzende Stützscheibe vorhanden ist.

In weiterer Ausgestaltung dieser Ausführungsform des Lagerungsteiles ist es vorteilhaft, daß die Einbuchtung von der einen Plattenoberfläche her bis etwa in der Ebene der anderen Plattenoberfläche geführt ist. Bei einer weiteren Ausführungsform des Lagerungsteiles des Gleitlagers ist vorgesehen, daß zwei Einbuchtungen vorhanden sind, die von beiden Plattenoberflächen in das Loch hineingeführt sind.

Nach einer weiteren Ausgestaltung der Erfindung ist vorgesehen, daß wenigstens die der Umformung unterliegenden Teile aus
- POM: (Polyoxymethylen/Polyacethal) oder
- ABS: (Acrylonitril-Butadien-Styrol (Copolymere)) oder
- PA: Polyamid oder
- HDPE: Polyäthylen oder
- PP: Polypropylen
bestehen.

In weiterer Ausgestaltung des Lagerungsteiles ist dabei vorgesehen, daß die Kunststoffe mit Fasern, wie Glas- oder Kohlenstoffasern, verstärkt sind, wobei ebenfalls vorgesehen sein kann, daß die Kunststoffe mit Füllstoffen versehen sind.

Das Verfahren nach der Erfindung wird in Verbindung mit Vorrichtungen zur Durchführung des Verfahrens nach der Erfindung anhand der Zeichnungen näher erläutert. Es zeigen:

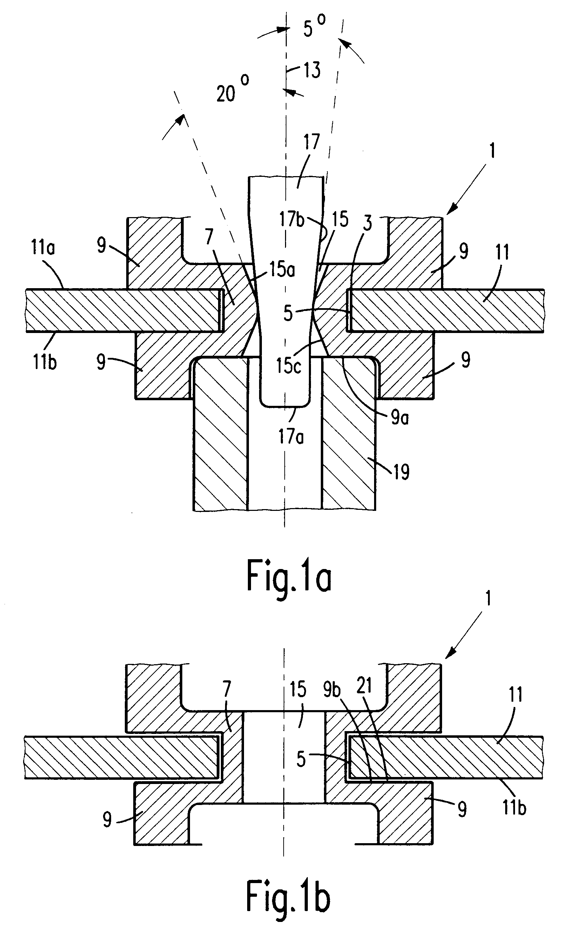

Fig. 1a und 1b das Herstellen eines Gleitlagers, beispielsweise für ein Funktionsteil, das nach dem Anspritzen an eine metallische Lagerplatte eines Laufwerks für Magnetbandgeräte seine Gleitlagereigenschaft erhält, wobei die Bildung der Gleitlagereigenschaft mittels eines konischen Dornes erfolgt, der durch einen Durchbruch im mittleren Bereich eines sich durch die Lagerplatte erstreckenden Kunststoffsteges des beweglichen Gleitlagerteiles hindurch geführt wird,

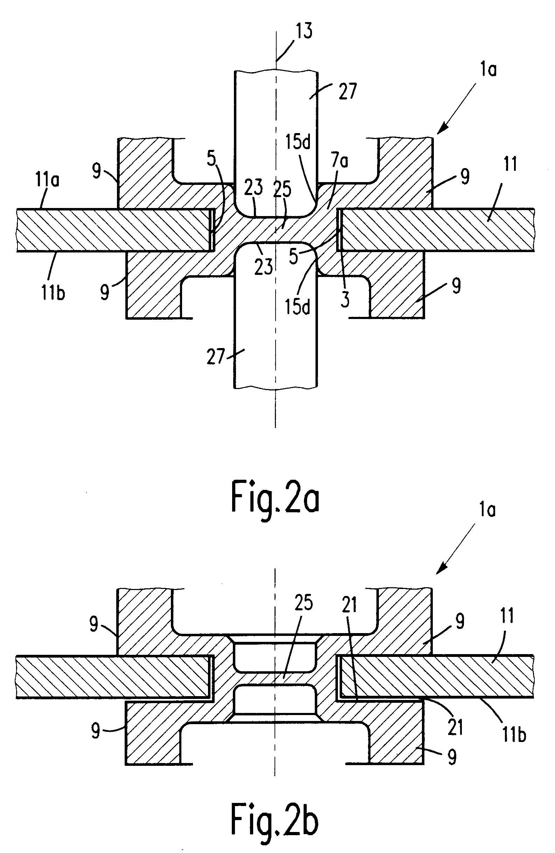

Fig. 2a und 2b das Umformen eines durch das Anspritzen an die metallische Lagerplatte gebildeten Gleitrohlager mittels zwei Dornen, die aus entgegengesetzten Richtungen axial in den Steg des Gleitlagers eingedrückt werden, wobei zwischen den Wänden eines vom Steg durchgriffenen Loches der metallischen Lagerplatte eine radiale Stützscheibe stehen bleibt; Fig. 2a zeigt das Einwirken der Dorne und Fig. 2b das Ergebnis der Dorneinwirkung,

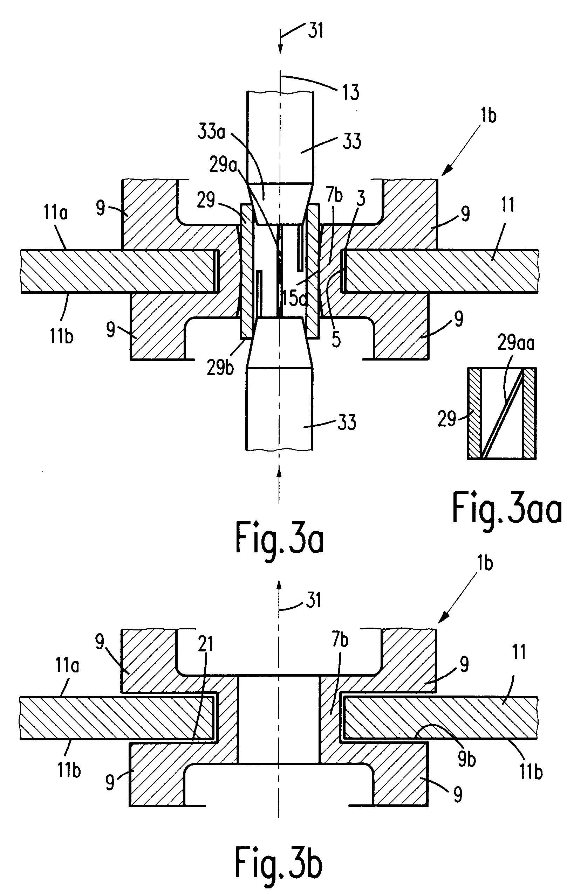

Fig. 3a und 3b das Umformen des angespritzten Lagerungsteiles des Funktionsteiles mit Hilfe von zwei in entgegengesetzten Richtungen wirkenden Dornen, die eine in den Durchbruch des Steges nach Fig. 1 eingesetzte Hülse radial aufweiten, wobei Fig. 3a den Aufweitvorgang und Fig. 3b das Ergebnis des Aufweitvorganges zeigen; Fig. 3aa zeigt eine wahlweise einsetzbare, diagonal geschlitzte Hülse,

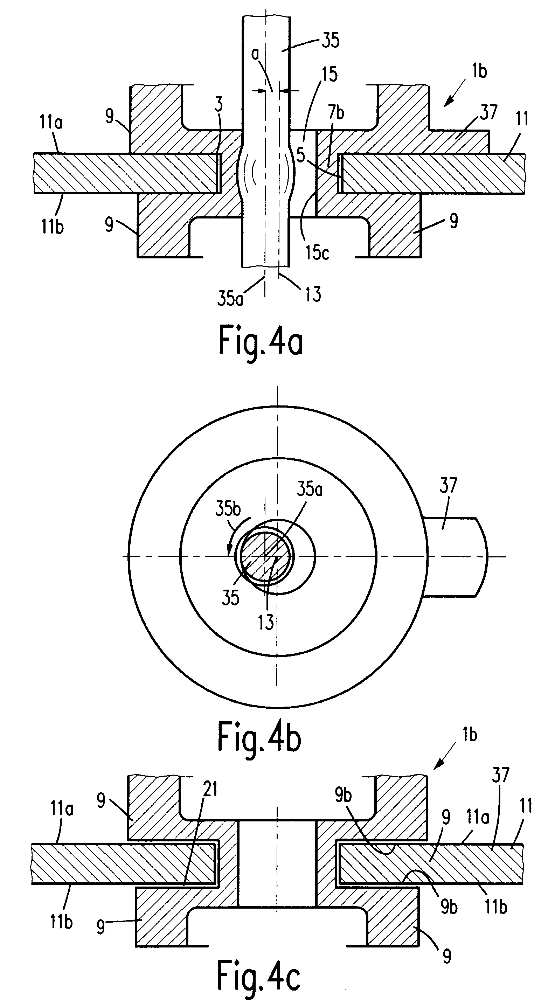

Fig. 4a bis 4c das Aufweiten des Steges nach Fig. 1 mit Hilfe eines exzentrisch angeordneten Dornes, wobei Fig. 4a den Aufweitvorgang im Schnitt und Fig. 4b den Aufweitvorgang in Draufsicht zeigen, während Fig. 4c das beim Aufweitvorgang ausgebildete Gleitlager zeigt,

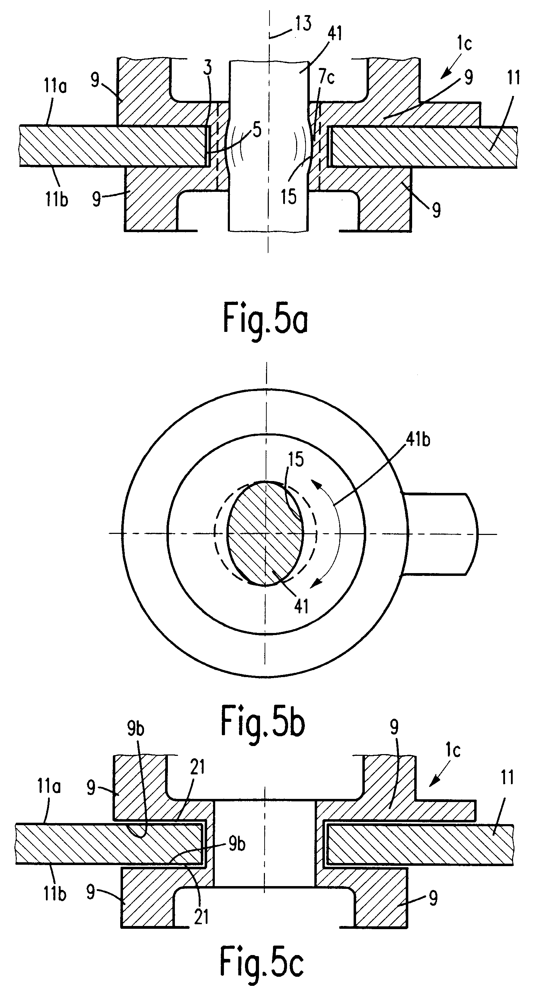

Fig. 5a bis 5c eine Variante der Ausführungsform nach Fig. 4, wobei der Durchbruch im Steg mit elliptischem Querschnitt gespritzt ist und in diesen elliptischen Durchbruch ein im Querschnitt elliptischer Dorn eingeführt wird, der durch ein Drehen im elliptischen Durchbruch den Steg aufweitet und dabei das Kunststoffmaterial verdrängt; Fig. 5a zeigt die elliptische Version im Schnitt und Fig. 5b die elliptische Version teilweise in Draufsicht bei geschnittenem Dorn; Fig. 5c zeigt die zum Gleitlager umgebildete Anspritzung nach Fig. 5a,

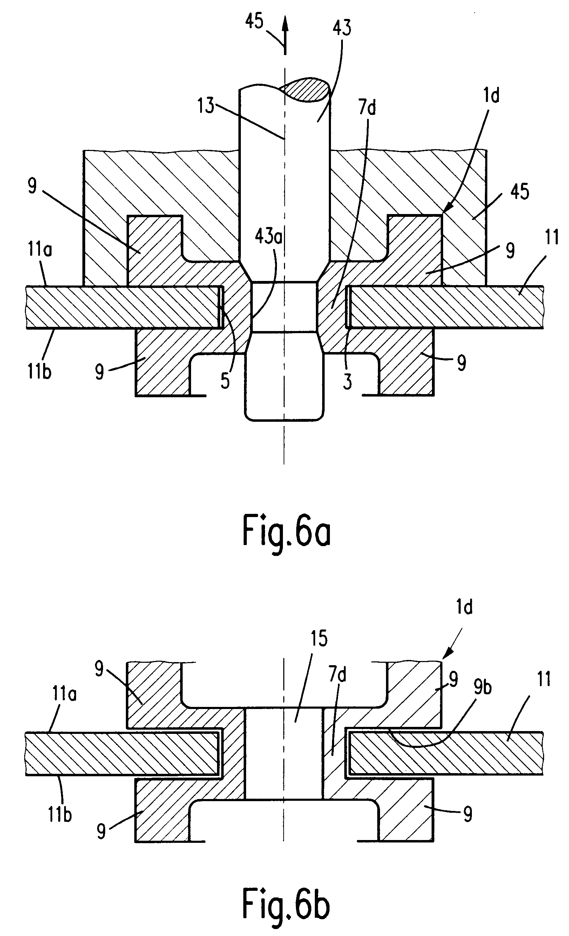

Fig. 6a und 6b die Umformung des Lagerungsteiles in ein funktionsfähiges Gleitlager, wobei der die Kunststoffverdrängung vornehmende Dorn bei dem Anspritzvorgang des Gleitrohlager mit eingespritzt und anschließend zum Verdrängen des Kunststoffes herausgezogen wird, wobei das Gleitrohlager nach Fig. 6a umgeformt wird in ein Gleitlager nach Fig. 6b,

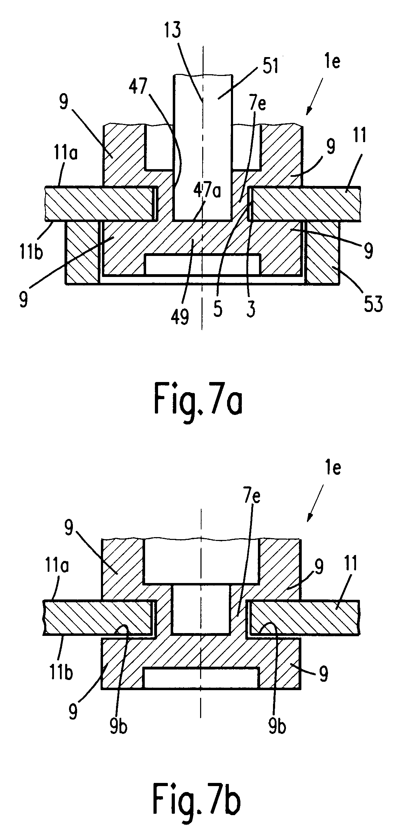

Fig. 7a und 7b ein Gleitrohlager ähnlich dem nach Fig. 2a und 2b mit einer bestehen bleibenden radialen Stützscheibe; ein Dorn wird in eine nicht durchgezogene zentrische Ausnehmung des Steges eingeführt und drückt gegen die radiale Stützscheibe, wobei sich der Steg längt; der Gleitlagerrohling nach Fig. 7a wird damit zu einem Gleitlager nach Fig. 7a umgeformt,

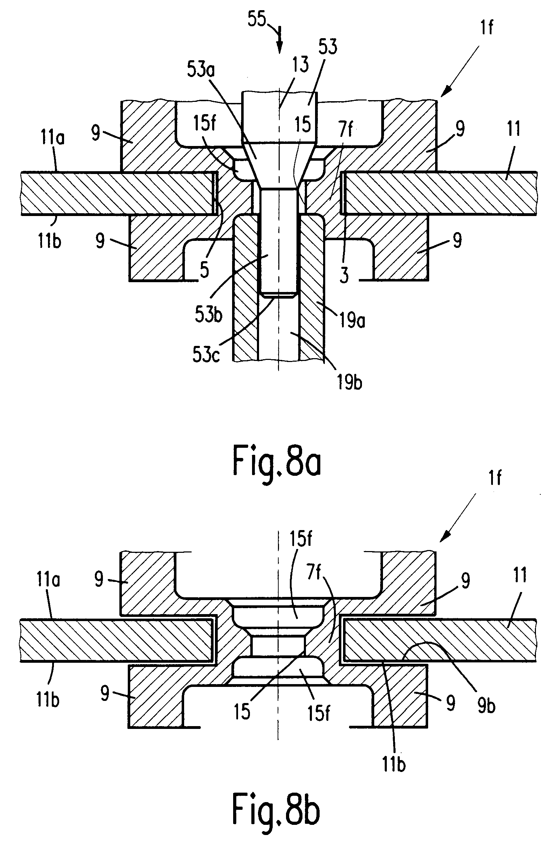

Fig. 8a und 8b die Umformung eines Gleitlagerrohlings mit einem Durchbruch für einen Dorn, wobei die Aufweitung des Steges zwischen dem Dorn und einem ortsfesten Gegenhalter erfolgt; Fig. 8a zeigt den Aufbau und Fig. 8b das zum Gleitlager umgeformten Gleitrohlager.

In der Outsert-Moulding-Technik, einer Kunststoffspritz- oder Gießtechnik, werden an einer metallischen Lagerplatte Funktionsteile gebildet, wie Zahnräder, Schieber, Stellhebel oder anderes mehr. Dabei besteht das jeweilige Lager aus einem Loch oder einem Schlitz in der metallischen Lagerplatte und aus angespritzten Lagerungsteilen, die aus einem das Loch durchgreifenden Lagersteg und die Lochränder an den Plattenoberflächen übergreifenden Haltestücken bestehen. Die Lagerungsteile tragen Funktionsteile, wie Zahnräder, Schieber, Hebel oder dergl, beispielsweise eines Laufwerkes für Magnetbandgeräte. Eine solche Anspritzung an dem Loch der Lagerplatte ist schwergängig beweglich, da sich infolge der Schwindung zwar der Steg von den Lochrändern gelöst hat, die Haltestücke jedoch fest auf den Plattenoberflächen aufsitzen. Dieses Rohlager muß also, um in ein Gleitlager umgeformt zu werden, verändert werden. Bei dieser Veränderung müssen die Eigenschaften des Kunststoffes berücksichtigt werden, damit seine teilkristalline Struktur erhalten bleibt und die Gleitlagerfähigkeit durch ungewünschte nachträgliche Rückbildung nicht wieder verloren geht.

Die Umbildung der Anspritzung des Lagerungsteiles in das bewegliche Teile eines Gleitlagers mit auf Lebenszeit gleichbleibenden Gleitlagereigenschaften erfolgt durch einen Verformungsvorgang, bei dem der Kunststoffsteg im Loch der Lagerplatte so verändert wird, insbesondere gelängt wird, daß sich die Haltestücke von den Plattenoberflächen abheben und das Schwindungsspiel zwischen Lagersteg und Lochwänden im wesentlichen erhalten bleibt. Das Wesen des Verfahrens zur Ausbildung der Gleitfähigkeit des beweglichen Lagerungsteiles des Gleitlagers besteht dabei darin, daß das Stegmaterial von seinem mittleren Stegbereich aus durch ein Wegdrücken zu den Lochwänden verformt wird, wobei der Verformungsvorgang zeitlich und temperaturmäßig unter Bedingungen abläuft, bei denen der Kunststoff, seinen Eigenschaften entsprechend und unter örtlich begrenzter Ausrichtung seiner ungestörten molekularen Struktur, besonders fließwillig ist. Der Verformungsvorgang darf nicht zu schnell vor sich gehen, damit der Kunststoff Gelegenheit hat, unter dem angelegten Druck seitlich auszuweichen. Jegliche Scherwirkung sollte vermieden werden. Die Temperatur des Kunststoffes im Augenblick der Verformung des Steges hat dabei einen deutlichen Einfluß auf seine Fließwilligkeit. Es hat sich herausgestellt, daß eine bevorzugte Verdrängungsgeschwindigkeit unterhalb von 0,1 m/sec liegt, wenn die Temperatur des Kunststoffmaterials während des Verdrängungsvorganges oberhalb der Gebrauchstemperatur und unterhalb des Schmelzbereiches eingestellt ist.

Bei der Verdrängung und Reckung des Kunststoffes muß darauf geachtet werden, daß der Lagersteg in Richtung auf die gegenüberliegenden Wände des Loches aufgeweitet wird. Das Kunststoffmaterial fließt damit bevorzugt zu den Lochwänden. Die einfachste Möglichkeit der Verdrängung in Richtung auf die Lochwände besteht darin, daß in dem Steg selbst im mittleren bereich ein totaler Durchbruch oder von der Außenseite her Einbuchtungen vorgesehen sind, in die von einer Seite ein Dorn oder von zwei Seiten zwei Dorne eingreifen. Dafür gibt es verschiedene bevorzugte vorrichtungsmäßige Ausgestaltungen, die im folgenden näher erläutert werden. Eine andere Möglichkeit des Verdrängens und Reckens besteht in einer Längung des Lagersteges in seiner Längsrichtung.

Da der Raum zwischen dem oder den Dornen und den Lochwänden beim Verdrängen in Richtung auf die Lochwände immer kleiner wird, muß der Kunststoff auch in Längsrichtung des Lagersteges ausweichen. Dieses Ausweichen in Längsrichtung des Lagersteges führt zu einer Stegverlängerung und einem Abheben der Haltestücke von den Plattenoberflächen unter Beibehalten des Schwindungsspieles zwischen Lagersteg und Lochwänden. Auf diese Weise wird aus dem durch seine Kunststoffanspritzung gebildeten Lagerungsteil an der Lagerplatte durch Umformung und Fixierung ein volltaugliches Gleitlager, dessen Lagereigenschaften sich wegen fehlender Rückbildung nicht mehr verschlechtern und dessen Material, weil eine chemische Strukturveränderung unterblieben ist, nicht zu einer vorzeitigen Alterung neigt.

Die Fig. 1a zeigt eine erste Ausführungsform einer Vorrichtung zum Aufweiten des Lagersteges von der Mitte heraus zu den Lochrändern der Lagerplatte. Das gleitfähig zu machende Rohlager 1 besteht dabei aus einem Loch 3 in der feststehenden Lagerplatte 1 mit Lochrändern 5 und einem beweglichen Lagerungsteil, das um das Loch 3 herum gespritzt ist, und aus einem Lagersteg 7 sowie Haltestücken 9 besteht. Der Steg 7 durchgreift das Loch 3 und verbindet die Haltestücke 9, die sich rings um die Lochränder 5 auf die Plattenoberflächen 11a, 11b aufsetzen. Infolge der Schwindung des Kunststoffmaterials der Lagerungsteile 7, 9 hat sich der Steg 7 von den Lochrändern 5 gelöst, während die Haltestücke 9 deutlich auf den Plattenoberflächen 11a, 11b aufsitzen. In dem mittleren Bereich des Steges 7 ist längs einer Mittellinie 13 (im Falle eines Schiebers) und einer Achse 13 (im Falle eines Drehlagers) ein Durchbruch 15 vorgesehen. Dieser Durchbruch 15 weist eine doppelkonische Wandgestaltung auf, wobei sich der geringste Öffnungsdurchmesser mit seiner Bauchigkeit etwa auf halber Durchbruchslänge befindet. In der Mitte des Steges 7 ist der Durchbruch 15 also am meisten eingeschnürt, und an den äußeren Enden des Steges 7 läuft er am weitesten auseinander. Die Divergenz zwischen der Mittellinie oder Achse 13 und den konischen Durchbruchswänden 15a kann dabei etwa 20° betragen.

Zum Aufweiten des Durchbruches 15 dient ein Dorn 17, der zum vorderen Dornende 17a konisch zuläuft. Die Konizität der Wandfläche 17b gegenüber der Mittellinie oder Achse 13 beträgt ca. 5°. Während der Dorn 17 in den Durchbruch 15 eingedrückt wird, ist das Lagerungsteil 1 von der Gegenseite her mittels eines Gegenhalters 19 abgestützt, der sich an eine Anlagefläche 9a der in der Zeichnung unten gelegenen Haltestücke 9 anlegt.

Wird der Dorn 17 langsam in den Durchbruch 15 eingeschoben, dann wird das Kunststoffmaterial des Steges 7 zum Lochrand 5 hin verdrängt, wobei der Kunststoff zum Lochrand 5 fließt und von dort in Richtung der Mittellinie oder Achse 13 in Richtung der Plattenoberflächen 11a und 11b ausweicht. Die Eindrückgeschwindigkeit des Dornes 17 wird bestimmt von der Fließwilligkeit des Kunststoffes.

Fig. 1b zeigt, wie das Lagerungsteil 1 nach dem Eindrücken des Dornes 17 verändert ist. Der Durchbruch 15 hat nun mehr gerade Wände, und der Steg ist so gelängt, daß zwischen der Plattenoberfläche 11b und der zuvor an dieser anliegenden Haltestückoberfläche 9b ein Spalt 21 entstanden ist. Da der Steg 7 gegenüber dem Lochrand 5 infolge der elastischen Rückfederung nach der Verformung wieder ein gewisses Radialspiel aufweist, ist aus dem Rohlager nach Fig. 1a nunmehr ein gleitfähiges Gleitlager nach Fig. 1b geworden.

Fig. 2a zeigt eine andere Ausführung des Lagerungsteiles 1a mit einem Steg 7a und Haltestücken 9. Das Lagerungsteil 1a ist wiederum über das Loch 3 der Lagerplate 1 mit Lochrand 7 gespritzt. Der Steg 7a durchsetzt das Loch 3, und die Haltestücke 9 sitzen auf den Oberflächen 11a und 11b der Lagerplatte 1 auf. In Richtung der Mittellinie oder Achse 13 sind in den Steg 7a Einbuchtungen 23 eingespritzt. Zwischen den Einbuchtungen 23 ist der Lagersteg 7a mittels einer radialen Stützscheibe 25 geschlossen. Zum Verformen des Steges 7a und damit zum Verdrängen des Kunststoffmaterials in Richtung auf die Lochwände 5 sind Dorne 27 vorgesehen, die im Querschnitt dem Querschnitt der Einbuchtungen 23 entsprechen. Die Dorne 23 werden gegeneinander gefahren, wobei unter einer Verminderung der Dicke der radialen Stützscheibe 25 das Kunststoffmaterial in Richtung auf die Lochränder 5 und weiter senkrecht dazu in Richtung der Mittellinie oder Achse 13 wegfließt. Nach dem Verformungsvorgang ist das beim Spritzen gebildete Rohlager nach Fig. 2a umgeformt in ein funktionsfähiges Gleitlager nach Fig. 2b, wobei die Stützscheibe 25 dünner geworden ist und sich die Oberflächen 9b der Haltestücke 9 von der Oberfläche 11a und 11b der Lagerplatte 1 abgehoben haben unter Ausbildung des Spaltes 21.

Es ist wichtig, daß die Verdrängungsrichtung des Kusntstoffes auf die Lochränder 5 zu verläuft. Um dieses Verdrängen in Richtung auf die Lochränder 5 zu verbessern, ist in Fig. 3a eine dritte Ausführungsform der Vorrichtung zur Durchführung des Verfahrens dargestellt, bei der in einen bauchigen Durchbruch 7b mit einer bauchigen Durchbruchswand 15c mit in Durchbruchsmitte geringstem Öffnungsdurchmesser eine mehrfach geschlitzte Hülse 29 eingesetzt ist, deren Schlitz 29a bevorzugt senkrecht zur Lagerplatte, also in Hülsenlängsrichtung verläuft. Die Schlitzung kann aber auch diagonal erfolgen, wie in Fig. 3aa anhand des Schlitzes 29 aa dargestellt ist. Die von beiden Plattenoberflächen 11a, 11b in Richtung der Pfeile 31 gegen die Hülsenenden 29b gefahrenen Dorne 33 stoßen mit konischen Ansätzen 33a gegen die axialen Hülsenenden 29b und weiten dabei den Steg 7b in Richtung auf die Lochränder 5 auf. Auch in diesem Fall fließt das Kunststoffmaterial in Richtung auf die Lochränder 5 und zugleich in Richtung der Mittellinie oder Achse 13 in beiden Richtungen zu den Plattenoberflächen 11a und 11b. Wie Fig. 3b zeigt, entspricht das Ergebnis dem Verformungsvorgang nach Fig. 1, wobei durch eine Längung des Lagersteges 7b die Oberflächen 9b der Haltestücke 9 sich von der Plattenoberflächen 11a und 11b abgehoben haben unter Ausbildung des Spaltes 21. Das im Spritzvorgang gebildete Rohlager nach Fig. 3a ist durch die Verformungsbehandlung mittels der Dorne 33 und der Hülse 29 nach Fig. 3a damit zu einem Gleitlager nach Fig. 3b umgewandelt.

Fig. 4a zeigt eine vierte Ausführungsform einer Vorrichtung zur Verformung des Lagersteges 7b. Das zunächst schlecht bewegliche, durch Spritzen hergestellte Rohlager besteht wieder aus der Platte 1 mit dem Loch 3, um das das Lagerungsteil 1b mit seinem Lagersteg 7b und seinen Haltestücken 9 gespritzt ist. Um dieses Rohlager in ein Gleitlager umzuwandeln, wird in den Durchbruch 15 mit seiner Durchbruchswand 15c ein Dorn 35 eingeführt, dessen Achse 35a gegenüber der Achse 13 des Durchbruches 15 um einen Betrag A versetzt ist. Der Dorn 35 ist im Bereich des Lagersteges 7b bauchig ausgelegt mit dem größten Bauchdurchmesser etwa in der Mitte der Lagerplatte. Damit läuft der Dorn 35, wenn er in Richtung eines Pfeiles 35b um die Achse 13 gedreht wird, exzentrisch um und weitet die Wandung 15c des Durchbruches 15 bevorzugt auf halber Länge des Durchbruchs in der Lagerplattenmitte mittels dieses Freiformens auf. Dabei wird das Kunststoffmaterial in Richtung auf die Lochränder 5 verdrängt. Es fließt dabei, wie in den vorangegangenen Ausführungsbeispielen, allerdings gleichzeitig in Achsrichtung in Richtung auf die Plattenoberflächen 11a und 11b.

Fig. 4b zeigt den Umlaufvorgang des Dornes 35. Fig. 4c zeigt das aus dem schwergängigen Rohlager 4a durch das exzentrische Umlaufen des Dornes 35 gebildete Gleitlager, wobei sich die Oberflächen 9b der Haltestücke 9 von den Oberflächen 11a und 11b der Lagerplatte 1 abgehoben haben unter Ausbildung von Spalten 21.

Um ein Verdrehen des Lagerungsteiles 1b bei dem Umlauf des Dornes 35 zu vermeiden, ist an dem Lagerungsteil 1b ein Ansatz 37 vorgesehen, mit dem das Lagerungsteil 1b gegen Verdrehungen gesichert werden kann.

Fig. 5a zeigt eine fünfte Ausführungsform einer Vorrichtung zur Durchführung des Verformungsvorganges des Steges 7c eines Lagerungsteiles 1c, das aus dem Lagersteg 7c und den Haltestücken 9 besteht. Der Durchbruch 15 hat in diesem Fall eine im Schnitt elliptische Gestalt. In diesen Durchbruch 15 von elliptischer Gestalt ist ein Dorn 41 von entsprechend elliptischer Gestalt einschiebbar. Deer Dorn 41 ist im Bereich des Lagersteges 7c bauchig ausgebildet mit dem größten Bauchdurchmesser etwa in der Mitte der Lagerplatte. Während Fig. 5a den Aufbau im Seitenansicht zeigt, ist der Aufbau in Fig. 5b im Querschnitt dargestellt. Man erkennt den geschnittenen Dorn 41, der in dem Durchbruch 15 von ebenfalls elliptischer Gestalt vorgesehen ist. Durch Drehen des Dornes 41 in Richtung des Doppelpfeiles 41b kann der Durchbruch 15 aufgeweitet werden und die in Fig. 5b gestrichelt dargestellte Gestalt erhalten.

Bei diesem Aufweitprozeß wird das Kunststoffmaterial, wie bei allen anderen Vorrichtungen, in Richtung auf die Lochränder 5 gedrückt, wobei er in Richtung auf diese Lochränder 5 fließt und ebenso eine Fließbewegung in Richtung der Achse 13 zu den Plattenoberflächen 11a und 11b ausführt. Dabei entsteht aus dem kaum oder schwer beweglichen Rohlager nach Fig. 5a und 5b das in Fig. 5c dargestellte Gleitlager, bei dem sich die Haltestückflächen 9b von den Lagerplattenoberflächen 11a und 11b gelöst haben unter Ausbildung von Spalten 21.

Fig. 6a zeigt eine sechste Ausführungsform der Vorrichtung zur Verformung des Lagerungsteiles 1d, das über das Loch 3 der Lagerplatte 1 gespritzt ist. Das Lagerungsteil 1d besteht aus einem das Loch 3 durchsetzenden Lagersteg 7d und Haltestücken 9, die über die Plattenoberflächen 11a und 11b greifen. In den Steg 7d ist ein Dorn 43 des Werkzeuges eingespritzt, wobei die Achse des Dornes 13 mit der Achse des Steges 7d zusammenfällt. Der Dorn 43 ist im Bereich des Steges 7d mit einer Einschnürung 43a versehen. Diese Einschnürung 43a ist in axialer Richtung etwa länger als der Steg 7d im Bereich der Lagerplatte 1.

Wie Fig. 6a zeigt, wird das Lagerungsteil 1d verformt durch das Herausziehen des Dornes 43, der ein Bestandteil des Werkzeuges ist. Beim Herausziehen des Dornes vor der Werkzeugtrennung, was zusammen mit anderen Schiebern, Stiften oder Halterungen des Werkzeuges erfolgen kann, wirkt das Werkzeug als Niederhalter 45, der auf der Seite der Lagerplattenoberfläche 11a diese abstützt. Wird nun zum Zwecke der Durchführung des Verformungsvorganges der Dorn 43 in Richtung eines Pfeiles 45 aus dem Lagersteg 7d herausgezogen, dann weitet sich der Lagersteg 7d in Richtung auf die Lochwände 5a auf. Infolge des Materialflusses in Richtung auf die Lochränder 5 und in Richtung auf die Lagerplattenoberflächen weitet sich der Steg in Richtung der Achse 13, und die Haltestückoberflächen 9b heben von den Plattenoberflächen 11a und 11b ab. Damit ist das kaum bewegliche Rohlager nach Fig. 6a zu einem Gleitlager nach Fig. 6b geworden.

Eine siebente Ausführungsform der Vorrichtung zur Durchführung des Verformungsvorganges des Lagerungsteiles ist in Fig. 7a dargestellt. Das Lagerungsteil 1e ist um das Loch 3 der Lagerplatte 1 gespritzt und besteht aus dem durch das Loch hindurchgreifenden Lagersteg 7e und den über die Plattenoberflächen 11a und 11b greifenden Haltestücken 9. In Richtung der Achse oder der Mittellinie 13 erstreckt sich in der Zeichnung von der Oberseite des Lagerungsteiles 1e her eine Einbuchtung 47, deren Boden 47a etwa in der Ebene der unteren Plattenoberfläche 11b vorgesehen ist. Eine wie eine radiale Stützscheibe wirkende Verbindung 49 verbindet die Haltestücke auf der Unterseite des Lagerungsteiles 1e nach Fig. 7a miteinander und steht ebenso mit dem Lagersteg 7e in Verbindung.

Es ist ein Dorn 51 vorgesehen, der in die Vertiefung 47 einsetzbar ist. Ein Gegenlager 53 stützt die untere Plattenoberfläche 11b ab.

Wird zur Durchführung des Verformungsvorganges der Dorn 51 gegen die Verbindung 49 gedrückt, dann heben sich unter Längung des Lagersteges 7e die Oberflächen 9b von den Plattenoberflächen 11a und 11b ab. Damit ist das kaum oder schwer bewegliche Rohlager nach Fig. 7a in ein Gleitlager nach Fig. 7b umgewandelt.

Eine achte Ausführungsform der Vorrichtung zur Durchführung des Verformungsvorganges wird anhand der Fig. 8a dargestellt. Das Lagerungsteil 1f ist dabei um das Loch 3 der Lagerplatte 1 gespritzt. Das Lagerungsteil 1f besteht aus einem Lagersteg 7f, der durch das Loch 3 hindurchgreift, und den Haltestücken 9, die auf den Oberflächen 11a und 11b der Platte 1 aufsitzen. Zentrisch durch den Lagersteg 7f erstreckt sich ein Durchbruch 15, der am oberen und unteren Ende nach Art eines Tellers 15f erweitert ist. Zum Verformen des Lagerungsteiles 1f wird dieses von unten her mittels eines Gegenhalters 19a abgestützt, der in den unteren Teller 15f eingreift. Von der Oberseite des Lagerungsteiles 1f greift in den oberen Teller 15f ein Dorn 53. Dieser Dorn geht in Richtung auf sein freies Ende 53c von einem Teil größeren Durchmessers, der etwa dem Durchmesser des Tellers 15f entspricht, über eine kegelstumpfförmige Einschnürung 53a in einen Dornteil 53b mit kleinerem Durchmesser. Dieser Dornteil 53b mit kleinerem Durchmesser greift in eine Ausnehmung 19b des Niederhalters 19a ein. Dorn 53 und Niederhalter 19a sind damit gegenseitig geführt.

Wenn der Dorn 53 in Richtung des Pfeiles 55 in den Lagersteg 9f einfährt, dann fließt das Kusntstoffmaterial des Lagersteges 7f radial in Richtung auf die Lochränder 5 und axial weiter in Richtung der beiden Lagerplattenoberflächen 11a und 11b. Der Lagersteg 7f längt sich dabei in Richtung der Achse 13, und die Haltestückoberflächen 9b heben sich von den Lagerplattenoberflächen 11a und 11b ab. Aus dem schwer beweglichen Rohlager nach Fig. 8a wird damit das Gleitlager nach Fig. 8b.

Nach dem Umformen und teilweise auch gleich beim Umformen wird eine Thermofixierung, d. h. ein Tempern bei fixierten Teilen vorgenommen. Ein alleiniges Tempern wird ein nachträgliches Schrumpfen zur Folge haben. Unter einem Tempern ist dabei eine Lagerung bei wesentlich höherer Temperatur als Raumtemperatur zu verstehen und zwar ohne Fixierung. Abhängig von der Art des Polymers erfolgt die Temperung meistens oberhalb von 100°C. Beim Fixieren wird der Umformdruck während des Abkühlens aufrechterhalten. Durch das Umformen und zusätzlich durch das Tempern und Fixieren werden die Lagereigenschaften belastungsgerechter und wird das Lager bis zur Temperatur des Fixiervorganges wärmebeständiger.

## Patentansprüche

1. Verfahren zum Herstellen eines Gleitlagers für ein bewegliches Funktionsteil, zu dessen Herstellung von einem Lagerungsteil (1 bis 7f) ausgegangen wird, das einstückig in Kunststoffspritz- oder Gießtechnik an eine metallische Lagerplatte (11) angeformt ist und das aus einem Lagersteg (7 bis 7f), der ein Loch (3) der metallischen Lagerplatte (11) durchgreift, und Haltestücken (9), die sich an beiden Plattenoberflächen (11a, 11b) seitlich des Loches (3) abstützen, besteht, dadurch gekennzeichnet, daß das Lagerungsteil (1 bis 7f) durch einen auf den Spritz- oder Gießvorgang folgenden Verformungsvorgang mittels einer Kraft verändert wird, die in den inneren, mittleren Bereich (15, 23, 47) des Lagersteges (7 bis 7f) eingebracht wird und von dort aus derart verformend auf das Lagerungsteil (1 bis 7f) wirkt, daß der Lagersteg (7 bis 7f) durch Streckung gelängt wird.

2. Verfahren nach Anspruch 1, dadurch gekennzeichnet, daß die aus dem Inneren (15, 23) des Lagersteges (7 bis 7d und 7f) heraus wirkende Kraft radial auf das Stegmaterial in Richtung auf die Lochwandung (5) in der metallischen Lagerplatte (11) wirkt und dabei das Stegmaterial zu den Lochwänden (5) wegdrückt.

3. Verfahren nach Anspruch 1, dadurch gekennzeichnet, daß die aus dem Inneren (47) des Lagersteges (7e) heraus wirkende Kraft axial auf das Stegmaterial wirkt und dabei den Lagersteg (7e) längs der Lochwandung (5) in der metallischen Lagerplatte (11) durch eine Streckung verformt.

4. Verfahren nach einem der Ansprüche 1 bis 3, dadurch gekennzeichnet, daß der Kunststoff aus dem Inneren des Lagersteges (7 bis 7f) heraus mittels Dornen (17, 27, 33, 35, 41, 43, 51, 53), die von einer oder beiden Lagerplattenoberflächen (11a, 11b) her in Durchbrüche (15) oder Einbuchtungen (23, 47) des Lagersteges (7 bis 7f) gefahren werden, verdrängt wird.

5. Verfahren nach Anspruch 1 oder 2, dadurch gekennzeichnet, daß der Kunststoff beim radialen Verdrängen zunächst zu den Lochwänden (5) und dort teilweise abgelenkt zu den Plattenoberflächen (11a, 11b) fließt.

6. Verfahren nach einem der Ansprüche 1 bis 5, dadurch gekennzeichnet, daß die Verdrängungsgeschwindigkeit kleiner als 0,1 m/sec beträgt.

7. Verfahren nach einem der Ansprüche 1 bis 6, dadurch gekennzeichnet, daß die Temperatur des Kunststoffes während des Verdrängungsvorganges oberhalb der Gebrauchstemperatur und unterhalb des Schmelzbereiches eingestellt ist.

8. Verfahren nach einem der Ansprüche 1 bis 7, dadurch gekennzeichnet, daß die bei der Behandlung entstandene Molekularorientierung durch ein Fixieren, nämlich ein Abkühlen bei aufrechterhaltenem Umformdruck, und ein Tempern, nämlich einer Temperaturlagerung ohne Belastung stabilisiert wird.

9. Verfahren nach einem der Ansprüche 1, 2 und 4 bis 8, dadurch gekennzeichnet, daß die Umformung des Kunststoffes mittels eines im inneren, mittleren Bereich des Lagersteges (7 bis 7d und 7f) drehenden und/oder vibrierenden Dornes (35, 41) durchgeführt wird, wobei der Verformungsvorgang unterstützt wird durch eine Lufttemperierung während der Dreh- oder Vibrationsbewegung des Dornes (35, 41).

10. Vorrichtung zur Durchführung des Verfahrens nach einem der Ansprüche 1 bis 9 zum Herstellen eines Gleitlagers für ein bewegliches Funktionsteil, zu dessen Herstellung von einem Lagerungsteil (1 bis 7f) ausgegangen wird, das einstückig in Kunststoffspritz- oder -gießtechnik an eine metallische Lagerplatte (11) angeformt ist und das aus einem Lagersteg (7 bis 7f ), der ein Loch (3) der metallischen Lagerplatte (11) durchgreift, und Haltestücken (9), die sich an beiden Plattenoberflächen (11a, 11b) seitlich des Loches (3) abstützen, besteht, dadurch gekennzeichnet, daß wenigstens ein Dorn (17, 27, 33, 35, 41, 43, 51, 53) vorgesehen ist, mittels dessen die in den inneren, mittleren Bereich (15, 23, 47) des Lagergestes (7 bis 7f) einzubringende Kraft eingebracht wird.

11. Vorrichtung nach Anspruch 10, dadurch gekennzeichnet, daß der Dorn (17) eine leicht konische Form aufweist und durch einen Durchbruch (15) im inneren, mittleren Bereich des Lagersteges (7 bis 7d und 7f) hindurchfahrbar ist zum teilweisen Verdrängen des zwischen dem Dorn (17) und den Lochwänden (5) befindlichen Kunststoffmaterials.

12. Vorrichtung nach Anspruch 11, dadurch gekennzeichnet, daß die Konizität des Dorns (17) 3° bis 7° gegenüber der Dornmittellinie (13) beträgt.

13. Vorrichtung nach Anspruch 10, gekennzeichnet durch eine geschlitzte Hülse (29), die bei einem runden Durchbruch (15) während des Aufweit- und Verdrängungsvorganges zwischen Durchbruchswand (15) und Lochwänden (5) vorgesehen ist, wobei die Dorne (33) mit konischen Dornspitzen (33a) aufweitend und damit den Lagersteg längend gegen die Hülse (29) drücken.

14. Vorrichtung nach Anspruch 13, dadurch gekennzeichnet, daß die Wand (15c) des Durchbruchs (15) zur Mitte hin bauchig ausgebildet ist mit einem geringeren Durchgangsquerschnitt.

15. Vorrichtung nach Anspruch 10, gekennzeichnet durch von beiden Plattenoberflächen (11a, 11b) her gegen jeweils eine Einbuchtung im inneren, mittleren Bereich des Lagersteges fahrbare Dorne (27) zum Verdrängen des zwischen den Dornen (27) und den Lochwänden (5) befindlichen Kunststoffmaterials.

16. Vorrichtung nach Anspruch 10, dadurch gekennzeichnet, daß der Durchbruch (15) im Lagersteg (7b) mittels wenigstens eines exzentrisch zu der Längsachse des Durchbruchs (15) angeordneten Dornes (35) durch einen exzentrischen Bewegungsvorgang des Dornes aufweitbar ist zum teilweisen Verdrängen des zwischen dem Dorn (35) und den Lochwänden (5) befindlichen Kunststoffmaterials.

17. Vorrichtung nach Anspruch 10, dadurch gekennzeichnet, daß der Durchbruch im Lagersteg (7c) senkrecht zu seiner Längsachse ein elliptisches Profil aufweist, daß der oder die Dorne (41) ein entsprechend geformtes elliptisches Profil aufweisen und daß das Material des Lagersteges (7c) durch eine umlaufende oder hin und her schwingende Bewegung des Dornes oder der Dorne (41) zwischen Dorn (41) und Lochwänden (5) durch teilweises Verdrängen des Kunststoffmaterials längbar ist.

18. Vorrichtung nach einem der Ansprüche 16 oder 17, dadurch gekennzeichnet, daß der Dorn (35, 41) eine Ausbauchung aufweist, deren größter Durchmesser sich etwa in der Mitte des Lagersteges (7b, 7c) bzw. im Bereich der Lagerplattenmitte befindet.

19. Vorrichtung nach Anspruch 10, dadurch gekennzeichnet, daß bereits bei der Herstellung des Lagerungsteiles in der Kunststoffspritz- oder Gießtechnik in den mittleren Bereich des Lagersteges (7d) ein Einlegedorn (43) eingefügt ist, der wenigstens im Lochbereich eine Einschnürung (43a) aufweist, und daß der Lagersteg (7d) durch ein Herausziehen des Einlegedornes (43) aufgeweitet wird, wodurch der zunächst vom Einlegedorn (43) ausgefüllte Durchbruch durch teilweises Verdrängen des Kunststoffmaterials aufgeweitet und der Lagersteg (7d) gelängt wird.

20. Vorrichtung nach Anspruch 10, dadurch gekennzeichnet, daß von einer der Plattenoberflächen (11a) eine Einbuchtung (47) in den Lagersteg (7e) hineinreicht, daß im Bereich der anderen Plattenoberfläche (11b) eine den vollen Querschnitt des Lagersteges (7e) umgrenzende Stützscheibe (49) vorhanden ist und daß in die Einbuchtung (47) des Lagersteges ein Dorn (31) einführbar ist, mit dem der Lagersteg (7e) in Längsrichtung reckbar ist.

21. Vorrichtung nach Anspruch 20, dadurch gekennzeichnet, daß der Boden der Einbuchtung (47a) etwa in der Höhe der beim Einfahren des Dornes (51) erreichten zweiten Plattenoberfläche (11b) vorgesehen ist.

22. Vorrichtung nach Anspruch 10, dadurch gekennzeichnet, daß gegen den Durchbruch (15) im Lagerungsteil (1f) ein Dorn (53) fahrbar ist, der in Richtung auf sein freies Ende (53c) von einem Teil größeren Durchmessers als der Durchbruch (15) über eine Einschnürung (53a) in einen Teil kleineren Durchmessers übergeht, und daß der Teil (53b) kleineren Durchmessers in eine Ausnehmung (19b) eines Niederhalters (19a) einfahrbar ist, mit dem das Lagerungsteil (1f) entgegen der Zustellrichtung des Dornes (53) abstützbar ist zum Verdrängen des Kunststoffmaterials in Richtung auf die Lochwände (5).

23. Vorrichtung nach Anspruch 22, dadurch gekennzeichnet, daß der Innendurchmesser des Niederhalters (19a) und der Außendurchmesser des Dornteiles (53b) mit kleinerem Durchmesser so aufeinander abgestimmt sind, daß der Dornteil (53b) in dem Niederhalter (19a) beim Verformungsvorgang geführt ist.

24. Mittels eines Verfahrens oder einer Vorrichtung nach einem der Ansprüche 1 bis 23 hergestelltes Lagerungsteil (1 bis 7f) eines Gleitlagers für ein bewegliches Funktionsteil, wobei das Lagerungsteil (1 bis 7f) und das bewegliches Funktionsteil einstückig in Kunststoffspritz- oder -gießtechnik an eine metallische Lagerplatte (11) angeformt sind und das Lagerungsteil aus einem Lagersteg (7 bis 7f), der ein Loch (3) der metallischen Lagerplatte (11) durchgreift, und Haltestücken (9), die sich an beiden Plattenoberflächen (11a, 11b) seitlich des Loches (3) abstützen, besteht, dadurch gekennzeichnet, daß der Lagersteg (7 bis 7f) in seinem inneren, mittleren Bereich (15, 23, 47) einen Durchbruch (15) oder mindestens eine Einbuchtung (23, 47) aufweist.

25. Lagerungsteil eines Gleitlagers nach Anspruch 24, dadurch gekennzeichnet, daß der Lagersteg (7, 7b, 7d, 7f) in seinem inneren, mittleren Bereich (15) und in Durchgangsrichtung den Durchbruch (15) mit der Durchbruchswand (15c) aufweist und daß der Durchbruch (15) vor dem Einfahren der Dorne (17, 51) eine zur Durchbruchsmitte zulaufende Wandausbildung mit geringeren Durchmessern hat.

26. Lagerungsteil eines Gleitlagers nach Anspruch 25, dadurch gekennzeichnet, daß die bauchige Wandausbildung ihren geringsten Durchbruchsdurchmesser etwa auf halber Durchbruchslänge aufweist.

27. Lagerungsteil eines Gleitlagers nach Anspruch 25, dadurch gekennzeichnet, daß die zur Durchbruchsmitte zulaufende Wandausbildung durch das Einbringen von Sattelflächen (15f) erreicht ist.

28. Lagerungsteil eines Gleitlagers nach Anspruch 24, dadurch gekennzeichnet, daß der Lagersteg (7) in seinem inneren, mittleren Bereich und in Durchgangsrichtung den Durchbruch (15) mit der Durchbruchswand (15c) aufweist und daß der Durchbruch (15) vor dem Einfahren der Dorne (33, 35) eine zu den Lochwänden (5) parallele Wandausbildung hat.

29. Lagerungsteil eines Gleitlagers nach Anspruch 25 oder 28, dadurch gekennzeichnet, daß in den Durchbruch (15) eine geschlitzte Hülse (29) eingespritzt ist, die sich nach dem Aufweiten der Hülse von den Lochwänden (15c) trennt.

30. Lagerungsteils eines Gleitlagers nach Anspruch 24, dadurch gekennzeichnet, daß von einer der Plattenoberflächen (11a) eine Einbuchtung (47) in den Lagersteg (7e) hineinreicht, und daß im Bereich der anderen Plattenoberfläche (11b) eine den vollen Querschnitt des Lagersteges umgrenzende Stützscheibe (49) vorhanden ist.

31. Lagerungsteil eines Gleitlagers nach Anspruch 30, dadurch gekennzeichnet, daß die Einbuchtung (47) von der einen Plattenoberfläche (11a) her bis etwa in der Ebene der anderen Plattenoberfläche (11b) geführt ist.

32. Lagerungsteil eines Gleitlagers nach Anspruch 24, dadurch gekennzeichnet, daß zwei Einbuchtungen (15d) vorhanden sind, die von beiden Plattenoberflächen (11a, 11b) in das Loch (5) hineingeführt sind.

33. Lagerungsteil eines Gleitlagers nach Anspruch 24, dadurch gekennzeichnet, daß wenigstens die der Umformung unterliegenden Teile aus
POM (Polyoxymethylen/Polyacethal) oder
ABS (Acrylonitril-Butadien-Styrol (Copolymere)) oder
PA Polyamid oder
HDPE Polyäthylen oder
PP Polypropylen
bestehen.

34. Lagerungsteil nach Anspruch 33, dadurch gekennzeichnet, daß die Kunststoffe mit Fasern, wie Glas- oder Kohlenstoffasern, verstärkt sind.

35. Lagerungsteil eines Gleitlagers nach Anspruch 33 und/oder 34, dadurch gekennzeichnet, daß die Kunststoffe mit Füllstoffen versehen sind.

## Claims

1. A method of manufacturing a plain bearing for a movable functional part whose manufacture starts with a bearing part (1 to 7f) formed integrally at a metal bearing plate (11) by a synthetic-resin (injection-) moulding technique and comprising a bearing bridge (7 to 7f) which is passed through a hole (3) of the metal bearing plate (11) and retaining pieces (9) which bear on the two plate surfaces (11a, 11b) laterally of the hole (3), characterized in that the bearing part (1 to 1f) is changed in a deformation process following the (injection-) moulding process by means of a force which is applied to the inner, central region (15, 23, 47) of the bearing bridge (7 to 7f) and from there acts on the bearing part (1 to 7f) with deforming effect such that the bearing bridge (7 to 7f) is lengthened through stretching.

2. A method as claimed in Claim 1, characterized in that the force acting from the interior (15, 23) of the bearing bridge (7 to 7d and 7f) applies itself radially to the bridge material in the direction of the hole wall surface (5) in the metal bearing plate (11), thus pressing away the bridge material towards the hole walls (5).

3. A method as claimed in Claim 1, characterized in that the force acting from the interior (47) of the bearing bridge (7e) applies itself axially to the bridge material, thus deforming the bearing bridge (7e) along the hole wall surface (5) in the metal bearing plate (11) through stretching.

4. A method as claimed in any one of the Claims 1 to 3, characterized in that the synthetic resin is forced away from the interior of the bearing bridge (7 to 7f) by means of mandrels (17, 27, 33, 35, 41, 43, 51, 53) which are introduced into through passages (15) or recesses (23, 47) of the bearing bridge (7 to 7f) from one of the or both bearing plate surfaces (11a, 11b).

5. A method as claimed in Claim 1 or 2, characterized in that during the radial displacement the synthetic resin first flows towards the hole walls (5) and is partly diverted there towards the plate surfaces (11a, 11b).

6. A method as claimed in any one of the Claims 1 to 5, characterized in that the displacement velocity lies below 0.1 m/s.

7. A method as claimed in any one of the Claims 1 to 6, characterized in that the temperature of the synthetic resin is set above the operational temperature and below the melting range during the displacement process.

8. A method as claimed in any one of the Claims 1 to 7, characterized in that the molecular orientation created during the treatment is stabilized by fixation, *i*.*e*. cooling down while the deformation pressure is maintained, and by tempering, *i*.*e.* storage at a certain temperature without load.

9. A method as claimed in any one of the Claims 1, 2, and 4 to 8, characterized in that the deformation of the synthetic resin is carried out by means of a mandrel (35, 41) which rotates and/or vibrates in the inner, central bridge region (7 to 7d and 7f), while the deformation process is enhanced by a hot-air treatment during the rotary or vibratory movement of the mandrel (35, 41).

10. A device for carrying out the method as claimed in any one of the Claims 1 to 9 for manufacturing a plain bearing for a movable functional part whose manufacture starts with a bearing part (1 to 7f) formed integrally at a metal bearing plate (11) by a synthetic-resin (injection-) moulding technique and comprising a bearing bridge (7 to 7f) which is passed through a hole (3) of the metal bearing plate (11) and retaining pieces (9) which bear on the two plate surfaces (11a, 11b) laterally of the hole (3), characterized in that at least one mandrel (17, 27, 33, 35, 41, 43, 51, 53) is provided by means of which the force to be applied to the inner, central region (15, 23, 47) of the bearing bridge (7 to 7f) is transmitted.

11. A device as claimed in Claim 10, characterized in that the mandrel (17) has a slightly tapering shape and can be moved through a passage (15) in the inner, central region of the bearing bridge (7 to 7d and 7f) for the partial displacement of the synthetic resin material present between the mandrel (17) and the hole walls (5).

12. A device as claimed in Claim 11, characterized in that the taper of the mandrel (17) relative to the mandrel centreline (13) is 3° to 7°.

13. A device as claimed in Claims 8 to 12, characterized by a slotted bush (29) which is provided, in the case of a round passage (15), between the wall of the passage (15) and the hole walls (5) during the widening and displacement process, whereby the mandrels (33) press with tapering mandrel tips (33a) against the bush (29) with widening effect, thus lengthening the bearing bridge.

14. A device as claimed in Claim 13, characterized in that the wall (15c) of the passage (15) has a convex shape towards the centre with a smaller passage diameter.

15. A device as claimed in Claim 10, characterized by mandrels (27) which can be moved from both plate surfaces (11a, 11b) each against a recess in the inner, central bridge region for displacing the synthetic resin material present between the mandrels (27) and the hole walls (5).

16. A device as claimed in Claim 10, characterized in that the passage (15) in the bearing bridge (7b) can be widened by means of at least one mandrel (35) arranged eccentrically relative to the longitudinal axis of the passage (15) through an eccentric motion of the mandrel, whereby the synthetic resin material present between the mandrel (35) and the hole walls (5) is partly displaced.

17. A device as claimed in Claim 10, characterized in that the passage in the bearing bridge (7c) has an elliptical profile perpendicularly to its longitudinal axis, in that the mandrel(s) (41) has (have) a correspondingly shaped elliptical profile, and in that the material of the bearing bridge (7c) can be lengthened between the mandrel(s) (41) and the hole walls (5) by partial displacement of the synthetic resin material through a rotating or reciprocating movement of the mandrel(s) (41).

18. A device as claimed in any one of the Claims 16 or 17, characterized in that the mandrel (35, 41) has a convex shape whose major diameter is situated approximately in the centre of the bearing bridge (7b, 7c), or in the central region of the bearing plate.

19. A device as claimed in Claim 10, characterized in that an insert mandrel (43) is already introduced into the central region of the bearing bridge (7d) during the manufacture of the bearing part by the (injection-) moulding technique, which insert mandrel has a constriction (43a) at least in the hole region, and in that the bearing bridge (7d) is widened through pulling-out of the insert mandrel (43) so that the passage originally occupied by the insert mandrel (43) is widened by a partial displacement of the synthetic resin material and the bearing bridge (7d) is lengthened.

20. A device as claimed in Claim 10, characterized in that a recess (47) enters the bearing bridge (7e) from one (11a) of the plate surfaces only, in that a support disc (49) covering the full cross-sectional area of the bearing bridge (7e) is present in the region of the other plate surface (11b), and in that a mandrel (31) is insertable into the recess (47) of the bearing bridge whereby the bearing bridge (7e) can be stretched in longitudinal direction.

21. A device as claimed in Claim 20, characterized in that the bottom of the recess (47a) is provided approximately at the level of the second plate surface (11b) reached by the mandrel (51) upon its insertion.

22. A device as claimed in Claim 10, characterized in that a mandrel (53) can be moved against the passage (15) in the bearing part (1f), which mandrel in the direction towards its free end (53c) shows a transition from a portion of greater diameter than the passage (15) *via* a tapering portion (53a) into a portion of smaller diameter, and in that the portion of smaller diameter (53b) can be introduced into a recess (19b) of a hold-down (19a) by means of which the bearing part (1f) can be supported against the application direction of the mandrel (53) for the displacement of the synthetic resin material in the direction of the hole walls (5).

23. A device as claimed in Claim 22, characterized in that the inner diameter of the hold-down (19a) and the outer diameter of the mandrel portion (53b) of smaller diameter are so attuned to one another that the mandrel portion (53b) is guided in the hold-down (19a) during the deformation process.

24. A bearing part (1 to 7f) of a plain bearing for a movable functional part formed by a method or a device as claimed in any one of the Claims 1 to 23, whereby the bearing part (1 to 7f) and the movable functional part are formed integrally at a metal bearing plate (11) by a synthetic-resin (injection-) moulding technique, and the bearing part comprises a bearing bridge (7 to 7f) which is passed through a hole (3) of the metal bearing plate (11) and retaining pieces (9) which bear on the two plate surfaces (11a, 11b) laterally of the hole (3), characterized in that the bearing bridge (7 to 7f) has a through passage (15) or at least a recess (23, 47) in its inner, central region (15, 23, 47).

25. A bearing part of a plain bearing as claimed in Claim 24, characterized in that the bearing bridge (7, 7b, 7d, 7f) comprises the passage (15) with the passage wall (15c) in its inner, central region (15) and in through direction, and in that the passage (15) has a wall shape which bulges towards the centre of the passage with smaller diameters thereof before entry of the mandrels (17, 51).

26. A bearing part of a plain bearing as claimed in Claim 25, characterized in that the wall bulge has its smallest passage diameter approximately half-way the passage length.

27. A bearing part as claimed in Claim 25, characterized in that the wall bulge towards the passage centre is achieved through the formation of saddle surfaces (15f).

28. A bearing part of a plain bearing as claimed in Claim 24, characterized in that the bearing bridge (7) comprises the passage (15) with the passage wall (15c) in its inner, central region (15) and in through direction, and in that the passage (15) has a wall shape which is parallel to the hole walls (5) before entry of the mandrels (33, 35).

29. A bearing part as claimed in Claim 25 or 26, characterized in that a slotted bush (29) is injection-moulded into the passage (15), which bush separates itself from the passage walls (15c) after widening of the bush.

30. A bearing part of a plain bearing as claimed in Claim 24, characterized in that a recess (47) enters the bearing bridge (7e) from one (11a) of the plate surfaces, and in that a support disc (49) covering the full cross-sectional area of the bearing bridge is present in the region of the other plate surface (11b).

31. A bearing part of a plain bearing as claimed in Claim 30, characterized in that the recess (47) extends from the one plate surface (11a) to approximately the plane of the other plate surface (11b).

32. A bearing part of a plain bearing as claimed in Claim 24, characterized in that two recesses (15d) are present, extending from the two plate surfaces (11a, 11b) into the hole (5).

33. A bearing part of a plain bearing as claimed in Claim 24, characterized in that at least the parts subjected to the deformation are made of
POM (polyoxymethylene/polyacetal), or
ABS (acrylonitrile-butadiene-styrol (copolymer)), or
PA (polyamide), or
HDPE (polythene), or
PP (polypropylene).

34. A bearing part as claimed in Claim 33, characterized in that the synthetic resins are reinforced with fibres, such as glass or carbon fibres.

35. A bearing part as claimed in Claim 33 and/or 34, characterized in that the synthetic resins are provided with fillers.

## Revendications

1. Procédé de fabrication d'un palier lisse pour une pièce fonctionnelle mobile, pour la fabrication duquel on part d'un coussinet (1 à 1f), qui est formé d'une seule pièce par moulage de matière plastique par injection ou par coulée sur une plaque-support métallique (11) et qui est constitué d'une portée (7 à 7f), qui traverse un trou (3) de la plaque-support métallique (11), et de joues de retenue (9), qui s'appuient sur les deux surfaces (11a, 11b) de la plaque à côté du trou (3), caractérisé en ce que le coussinet (1 à 1f) est modifié au cours d'une opération de déformation qui suit l'opération d'injection ou de coulée, par une force qui est exercée dans la zone centrale interne (15, 23, 47) de la portée (7 à 7f) et agit delà sur le coussinet (1 à 1f) en le déformant, de telle sorte que la portée (7 à 7f) soit allongée par étirage.

2. Procédé suivant la revendication 1, caractérisé en ce que la force agissant de l'intérieur (15, 23) de la portée (7 à 7d et 7f) agit radialement sur la matière de la portée en direction de la paroi (5) du trou dans la plaque-support métallique (11) et repousse alors la matière vers les paroi (5) du trou.

3. Procédé suivant la revendication 1, caractérisé en ce que la force agissant de l'intérieur (47) de la portée (7e) agit axialement sur la matière de la portée et par conséquent, la portée (7e) se déforme par étirage le long de la paroi (5) du trou dans la plaque-support métallique (11).

4. Procédé suivant l'une quelconque des revendications 1 à 3, caractérisé en ce que la matière plastique est refoulée de l'intérieur de la portée (7 à 7f) par des mandrins (17, 27, 33, 35, 41, 43, 51, 53) qui sont amenés d'un côté ou des deux côtés (11a, 11b) de la plaque-support dans des percements (15) ou des creux (23, 47) de la portée (7 à 7f).

5. Procédé suivant la revendication 1 ou 2, caractérisé en ce que la matière plastique s'écoule lors du refoulement radial tout d'abord vers les parois (5) du trou et en cet endroit, elle est en partie déviée vers les surfaces (11a, 11b) de la plaque.

6. Procédé suivant l'une quelconque des revendications 1 à 5, caractérisé en ce que la vitesse de refoulement est inférieure à 0,1 m par seconde.

7. Procédé suivant l'une quelconque des revendications 1 à 6, caractérisé en ce que la température de la matière plastique pendant l'opération de refoulement est réglée au-dessus de la température d'utilisation et en dessous de la zone de fusion.

8. Procédé suivant l'une quelconque des revendications 1 à 7, caractérisé en ce que l'orientation moléculaire qui apparaît au cours du traitement est stabilisée par un fixage, c'est-à-dire un refroidissement avec maintien de la pression de formage, et par un étuvage, c'est-à-dire un chauffage sans contrainte.

9. procédé suivant l'une quelconque des revendications 1, 2 et 4 à 8, caractérisé en ce que le formage de la matière plastique est exécuté par un mandrin (35, 41) tournant et/ou vibrant dans la zone centrale interne de la portée (7 à 7d et 7f), l'opération de déformation étant favorisée par un refroidissement à l'air pendant le mouvement de rotation ou de vibration du mandrin (35, 41).

10. Dispositif pour l'exécution du procédé suivant l'une quelconque des revendications 1 à 9 pour la fabrication d'un palier lisse pour une pièce fonctionnelle mobile, pour la fabrication duquel on part d'un coussinet (1 à 1f) qui est formé d'une seule pièce par moulage par injection ou par coulée de matière plastique sur une plaque-support métallique (11) et qui comprend une portée (7 à 7f), qui traverse un trou (3) de la plaque-support métallique (11), et des joues de retenue (9), qui s'appuient sur les deux surfaces (11a, 11b) de la plaque à côté du trou (3), caractérisé en ce qu'un mandrin (17, 27, 33, 35, 41, 43, 51, 53) au moins est prévu, au moyen duquel la force à exercer dans la zone centrale interne (15, 23, 47) de la portée (7 à 7f) est mise en oeuvre.

11. Dispositif suivant la revendication 10, caractérisé en ce que le mandrin (17) présente une forme légèrement conique et peut être introduit à travers un percement (15) dans la zone centrale interne de la portée (7 à 7d et 7f) afin de refouler en partie la matière plastique se trouvant entre le mandrin (17) et les parois (5) du trou.

12. Dispositif suivant la revendication 11, caractérisé en ce que la conicité du mandrin (17) vaut entre 3° et 7° par rapport à la ligne médiane (13) du mandrin.

13. Dispositif suivant la revendication 10, caractérisé en ce qu'une douille fendue (29), qui est prévue dans le cas d'un percement rond (15) pendant l'opération d'élargissement et de refoulement entre la paroi (15) du percement et les parois (5) du trou, les mandrins (33) exerçant une pression contre la douille (29) par leurs extrémités coniques (33a) et élargissant et donc allongeant la portée.

14. Dispositif suivant la revendication 13, caractérisé en ce que la paroi (15c) du percement (15) est conçue bombée vers le centre avec une section transversale de passage plus petite.

15. Dispositif suivant la revendication 10, caractérisé par des mandrins (27) que l'on peut amener depuis les deux surfaces (11a, 11b) de la plaque, chacun contre un creux dans la zone centrale interne de la portée, en vue de refouier la matière plastique se trouvant entre les mandrins (27) et les parois (5) du trou.

16. Dispositif suivant [a revendication 10, caractérisé en ce que le percement (15) dans la portée (7b) peut être élargi, afin de refouler partiellement la matière plastique se trouvant entre le mandrin (35) et les parois (5) du trou, au moyen d'au moins un mandrin (35) disposé excentriquement par rapport à l'axe longitudinal du percement (15) par une opération de déplacement excentrique du mandrin.

17. Dispositif suivant la revendication 10, caractérisé en ce que le percement dans la portée (7c) présente perpendiculairement à son axe longitudinal un profil elliptique, que le ou les mandrins (41) présentent un profil elliptique formé de manière correspondante et que la matière de la portée (7c) peut être allongée entre le mandrin (41) et les parois (5) du trou par le refoulement partiel de la matière plastique dû à un mouvement de rotation ou d'oscillation du ou des mandrins (41).

18. Dispositif suivant l'une des revendications 16 ou 17, caractérisé en ce que le mandrin (35, 41) présente un renflement, dont le diamètre le plus grand se trouve presqu'au milieu de la portée (7b, 7c) ou dans la zone du milieu de la plaque-support.

19. Dispositif suivant la revendication 10, caractérisé en ce que, lors de la fabrication même du coussinet par moulage de matière plastique par injection ou par coulée dans la zone centrale de la portée (7d), est inséré un mandrin noyé (43), qui présente au moins dans la zone du trou un étranglement (43a), et que la portée (7d) est élargie par une extraction du mandrin noyé (43), grâce à quoi le percement initialement rempli par le mandrin noyé (43) est élargi par refoulement partiel de la matière plastique et la portée (7d) est allongée.

20. Dispositif suivant la revendication 10, caractérisé en ce que depuis une des surfaces (11a) de la plaque, un creux (47) s'enfonce dans la portée (7e), que dans la zone de l'autre surface (11b) de la plaque est présent un opercule de support (49) délimitant toute la section transversale de la portée (7e) et qu'un mandrin (31) peut être introduit dans le creux (47) de la portée, mandrin avec lequel la portée (7e) peut être étirée dans sa direction longitudinale.

21. Dispositif suivant la revendication 20, caractérisé en ce que le fond (47a) du creux est prévu à peu près à la hauteur de la deuxième surface (11b) de la plaque atteinte lors de l'introduction du mandrin (51).

22. Dispositif suivant la revendication 10, caractérisé en ce que l'on peut amener contre le percement (15) dans le coussinet (1f) un mandrin (53), qui en direction de son extrémité libre (53c), passe d'une partie de diamètre supérieur à celui du percement (15) via un étranglement (53a) à une partie de diamètre inférieur, et que la partie (53b) de diamètre inférieur peut être introduite dans un creux (19b) d'un support de butée (19a), par lequel le coussinet (1f) est en appui à l'encontre de la direction d'avance du mandrin (53) afin de refouler la matière plastique en direction des parois (5) du trou.

23. Dispositif suivant la revendication 22, caractérisé en ce que le diamètre interne du support de butée (19a) et le diamètre externe de la partie (53b) du mandrin présentant le plus petit diamètre sont adaptés l'un à l'autre de telle sorte que la partie (53b) du mandrin soit amenée dans le support de butée (19a) lors de l'opération de déformation.

24. Coussinet (1 à 1f) d'un palier lisse pour une pièce fonctionnelle mobile fabriqué au moyen d'un procédé ou d'un dispositif suivant l'une quelconque des revendications 1 à 23, étant entendu que le coussinet (1 à 1f) et la pièce mobile sont formés d'une seule pièce par moulage de matière plastique par injection ou par coulée sur une plaque-support métallique (11) et que le coussinet est constitué d'une portée (7 à 7f), qui traverse un trou (3) de la plaque-support métallique (11), et de joues de retenue (9), qui s'appuient sur les deux surfaces (11a, 11b) de la plaque à côté du trou (3), caractérisé en ce que la portée (7 à 7f) présente dans sa zone centrale interne (15, 23, 47) un percement (15) ou au moins un creux (23, 47).

25. Coussinet d'un palier lisse suivant la revendication 24, caractérisé en ce que la portée (7, 7b, 7d, 7f) présente dans sa zone centrale interne (15) et dans la direction de son passage le percement (15) avec la paroi (15c) du percement, et que le percement (15), avant l'introduction des mandrins (17, 51), présente une configuration de paroi convergeant vers le centre du percement avec de plus petits diamètres.

26. Coussinet d'un palier lisse suivant la revendication 25, caractérisé en ce que la configuration de paroi bombée présente son diamètre de percement le plus petit presque à la mi-longueur du percement.

27. Coussinet d'un palier lisse suivant la revendication 25, caractérisé en ce que la configuration de paroi convergeant vers le centre du percement est obtenue par la mise en oeuvre de surfaces (15f) à deux pentes.

28. Coussinet d'un palier lisse suivant la revendication 24, caractérisé en ce que la portée (7) présente, dans sa zone centrale interne et dans la direction de son passage, le percement (15) avec la paroi (15c) de percement et que le percement (15), avant l'introduction des mandrins (33, 35), présente une configuration de paroi parallèle aux parois (5) du trou.

29. Coussinet d'un palier lisse suivant la revendication 25 ou 28, caractérisé en ce que dans le percement (15) est injectée une douille fendue (29), qui se détache des parois (15c) du trou après son élargissement.

30. Coussinet d'un palier lisse suivant la revendication 24, caractérisé en ce qu'un creux (47) s'enfonce dans la portée (7e) depuis une des surfaces (11a) de la plaque, et que dans la zone de l'autre surface (11b) de la plaque, un opercule de support (49) délimitant toute la section transversale de la portée est présent.

31. Coussinet d'un palier lisse suivant la revendication 30, caractérisé en ce que le creux (47) va d'une surface (11a) de la plaque jusqu'environ le plan de l'autre surface (11b) de la plaque.

32. Coussinet d'un palier lisse suivant la revendication 24, caractérisé en ce que deux creux (15d) sont présents, qui s'étendent dans le trou (5) depuis les deux surfaces (11a, 11b) de la plaque.

33. Coussinet d'un palier lisse suivant la revendication 24, caractérisé en ce qu'au moins les parties soumises au formage sont faites de
POM (polyoxyméthylène/polyacétal) ou
ABS [acrylonitrile-butadiène-styrène (copolymère)] ou
PA polyamide ou
HDPE polyéthylène ou
PP polypropylène.

34. Coussinet suivant la revendication 33, caractérisé en ce que les matières plastiques sont renforcées par des fibres, telles que des fibres de verre ou de carbone.

35. Coussinet d'un palier lisse suivant la revendication 33 et/ou 34, caractérisé en ce que les matières plastiques sont pourvues de matières de charge.
